# EUROPEAN PATENT APPLICATION

(11) **EP 3 553 652 A1**
(43) Date of publication of application: **16.10.2019**
(21) Application number: 19178521.1
(22) Date of filing: 18.05.2015
(51) Int. Cl.: G06F 8/61, G06F 8/65, G06F 8/71, H04L 29/08

(54) **TABLET BASED AIRBORNE DATA LOADER**

(30) Priority: 16.05.2014 US 201414279691
(62) Divisional of application: 15168052.7
(71) Applicant: ROSEMOUNT AEROSPACE INC., Burnsville, MN 55306-4898 (US)
(72) Inventor: HAUKOM, Michael James, Farmington MN 55024 (US); HORSAGER, Thomas Jay, Inver Grove Hts. MN 55077 (US)
(74) Representative: Dehns

(57) **Abstract**

A method for data loading with a tablet includes receiving one or more software updates published by a ground station and storing the software updates on the tablet. The method also includes establishing communications between the tablet and a tablet interface module of an aircraft and determining if software on the aircraft needs to be updated. Based on determining that the software on the aircraft needs to be updated, the method includes transmitting at least one of the one or more software updates to the tablet interface module for loading into the aircraft and monitoring an installation process of the software updates in the aircraft via the tablet interface module.

## Description

### BACKGROUND OF THE INVENTION

The present disclosure relates to the field of aircraft avionics, and more specifically, to a tablet based airborne data loader.

In general, data loaders are used to provide software updates to avionics systems and to update databases used by avionics systems. Airborne data loaders (ADL) are permanently installed on the aircraft and transmit the software updates via the aircraft's data bus. In addition to uploading software updates, the data loaders can also download data from the aircraft avionics systems. Currently available airborne data loaders are costly and typically cannot receive data wirelessly. Traditional data loaders were designed with a disk drive for a 3.5" floppy diskette that was used to install the software updates and to update databases used by avionics systems. Overtime, the size of the updates to the software and the databases has made the use of floppy diskettes unfeasible as several diskettes are often required for a simple update and the speed of reading data from these diskettes is very slow. In many cases, problems that can occur with the magnetic media include complete failure of the media or corrupt data on the media, both of which prevent a successful data loading of the required line replaceable unit (LRU). US 2013/0067450 teaches upgrading aircraft software.

As the use of tablet computing devices becomes more prevalent, many operators of aircraft would like to use these tablet devices to interface with the aircraft avionics system. However, due to reliability, safety and security reasons aircraft avionics systems are typically closed systems which do not permit operators from using non-integrated electronics, such as commercially available tablet devices, to communicate with the avionics system. In addition, due to possible interference that may be caused by such tablet devices, the use of tablet devices on the flight deck of the aircraft has been restricted.

### BRIEF DESCRIPTION OF THE INVENTION

According to one embodiment, a method for wireless data loading with a tablet includes receiving one or more operational software or database updates published by a ground station and wirelessly distributing and storing the software updates on the tablet. The method also includes establishing communications between the tablet and a tablet interface module installed on an aircraft. Once the tablet is connected to the tablet interface module (via wired or wireless connection) an application hosted on the tablet interface module or tablet can query aircraft avionics components for configuration management information and determining if software on the aircraft needs to be updated. Based on determining that the software and/or databases on the aircraft needs to be updated, the method includes transmitting at least one of the one or more software updates to the tablet interface module for loading into the aircraft and monitoring an installation process of the software updates in the aircraft via the tablet interface module.

Accordingly to another embodiment, a tablet interface module includes a first transceiver configured to communicate with one or more tablets, a second transceiver configured to communicate with an aircraft interface device and a user interface module. The tablet interface receives software updates for an aircraft from a tablet and transmits the software updates to the aircraft interface device for loading onto an avionics system of the aircraft.

Additional features and advantages are realized through the techniques of the present invention. Other embodiments and aspects of the invention are described in detail herein and are considered a part of the claimed invention. For a better understanding of the invention with the advantages and the features, refer to the description and to the drawings.

### BRIEF DESCRIPTION OF THE DRAWINGS

The subject matter which is regarded as the invention is particularly pointed out and distinctly claimed in the claims at the conclusion of the specification. The foregoing and other features, and advantages of the invention are apparent from the following detailed description taken in conjunction with the accompanying drawings in which:
FIG. 1 is a block diagram of a system for tablet based airborne data loading in accordance with an embodiment of the disclosure;
FIG. 2 is a block diagram of tablet interface module in accordance with an embodiment of the disclosure;
FIG. 3 is a block diagram of an aircraft interface device in accordance with an embodiment of the disclosure; and
FIG. 4 is a flow chart diagram of a method for data loading with a tablet in accordance with an embodiment of the disclosure.

### DETAILED DESCRIPTION OF THE INVENTION

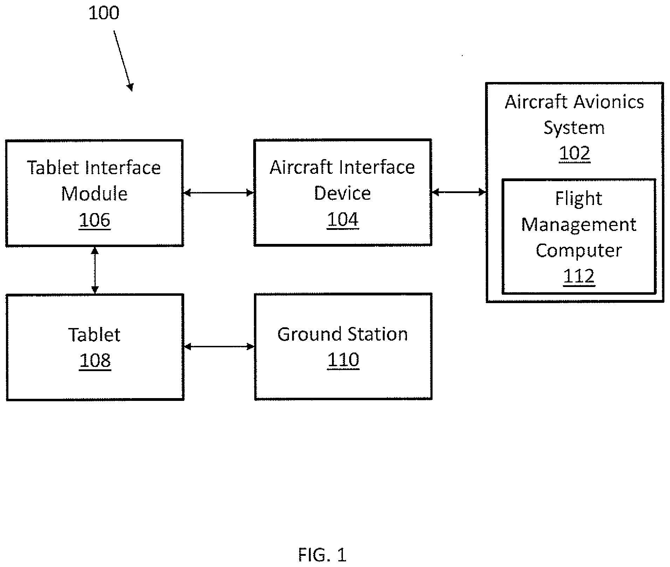

Referring now to FIG. 1, a block diagram of a system 100 in accordance with an embodiment of the disclosure is shown. As illustrated, the system 100 includes an aircraft avionics system 102, an aircraft interface device 104, a tablet interface module 106, a tablet 108, and a ground station 110. In certain or example embodiments, the aircraft avionics system 102 includes a flight management computer 112 that may include, but is not limited to, multiple sensors, communications systems and navigation systems. The flight management computer 112 is provided herein as an example of avionics that require frequent data loading of navigational databases and operational software. It will be appreciated by those of ordinary skill in the art that the flight management computer 112 could be other avionics as well such as ATSU's and CMU's, etc. The aircraft avionics system 102 provides data to the aircraft interface device 104, which acts as a data concentrator for the aircraft avionics system 102. In one embodiment, the aircraft interface device 104 is configured for connection to one or more operationally approved devices and to act as a partition between the aircraft avionics system 102 and the operationally approved devices. In one embodiment, the tablet interface module 106 is an operationally approved device that may be connected to the aircraft interface device 104. The tablet interface module 106 in such an embodiment is configured to send and receive data from the aircraft interface module 104. In one embodiment, the tablet 108 is configured to communicate, either wired or wirelessly, with the tablet interface module 106 using any suitable communications protocol. In one embodiment, the use of the tablet interface module 106 and the aircraft interface device 104 permits aircraft operators to use commercially available tablets 108 to load data into a flight management computer 112 that is part of the aircraft avionics system 102. As used herein, the term "tablet" refers to any commercially available tablet computing device, smartphone, laptop or other mobile computing device.

In exemplary embodiments, the ground station 110 includes one or more computers that received software updates from a variety of sources, such as equipment manufacturers, via the Internet. The ground station 110 verifies the updates and publishes the received software updates to the appropriate aircraft type. In exemplary embodiments, the ground station 110 wireless communicates with one or more tablets 108 via a cellular communications network, a Wifi network, or any other suitable wireless communications protocol. Upon the ground station 110 publishing a software update, the tablets 108 will download the software update if the software update relates to a type of aircraft supported by the tablet. For example, a user, such as a mechanic, captain or other operator of a tablet 108 may select the types of aircrafts that the captain is certified for and the tablet 108 will automatically download any updates published for those aircrafts selected.

In exemplary embodiments, the tablet 108 includes a data loading wireless transport application that automatically retrieves data loading packages from ground station 110. Once the tablet 108 establishes communication with the tablet interface module 106, the tablet 108 downloads relevant software updates to the tablet interface module 106 for data loading. In exemplary embodiments, the tablet 108 may automatically establish communication with the tablet interface module 106 when the tablet is within a predefined range of the tablet interface module 106. In one embodiment, the operator of the tablet may be required to provide security credentials that are verified by the tablet interface module 106 to establish communication between the tablet 108 and the tablet interface module 106. In exemplary embodiments, the tablet interface module 106 provides the tablet 108 with an indication of the type of the aircraft and with the current version of the software on the aircraft, which allows the tablet 108 to determine if the software on the aircraft needs to be updated. The determination if the software on the aircraft needs to be updated is based on a comparison of the version of the software on the aircraft and the software updates stored on the tablet for the corresponding type of aircraft. In exemplary embodiments, if the software of the aircraft is in need of updating, the table 108 downloads relevant software updates to the tablet interface module 106 and monitors the data loading initiation, progress and success criteria. In exemplary embodiments, the tablet 108 receives confirmation from the tablet interface module 106 upon the successful installation of the software update and transmits data loading status to ground station 110.

In exemplary embodiments, the tablet interface module 106 includes an airborne data loader application that communicates with the tablet 108 and with the aircraft interface device 104. In one embodiment, the tablet interface module 106 communicates with the aircraft interface device 104 via A834 STAP to facilitate data loading to target line replaceable unit. In other embodiments, the tablet interface module 106 can also support A615A data loading over Ethernet with or without the aircraft interface device 104. Essentially, the data is loaded from the tablet interface module 106 to the aircraft interface device 104 and then to the avionics system via a ARINC 429 connection , an Ethernet connection, or the like

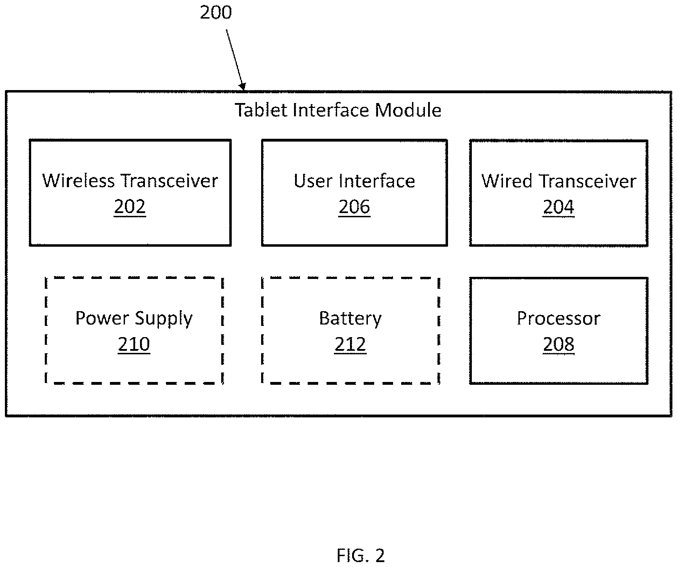

Referring now to FIG. 2, a block diagram of a tablet interface module 200 in accordance with an embodiment of the disclosure is shown. As illustrated, the tablet interface module 200 may include a wireless transceiver 202, a wired transceiver 204, a user interface 206 and a processor 208. The wireless transceiver 202 is configured to communicate with one or more tablets and may be configured to use a variety of known wireless communications protocols. For example, the wireless transceiver 202 may be configured to communicate with the tablets via WiFi, Bluetooth, or the like. The wired transceiver 204 is configured to communicate with the tablet and aircraft interface device and may be configured to use a variety of known wired communications protocols. For example, the wired transceiver 204 may be configured to communicate with the tablets via Ethernet (using TCP/IP, UDP or the like), a serial connection (using SSP, SIP or the like) (i.e., 232/422/485), a USB connection, or the like. In exemplary embodiments, the wired transceiver 204 may also be configured to communicate with one or more tablets. The tablet interface module 200 also includes a processor 208 which can be any custom made or commercially available processor, a central processing unit (CPU), an auxiliary processor among several processors, a semiconductor based microprocessor (in the form of a microchip or chip set), a macroprocessor, or generally any device for executing instructions.

In one embodiment, the tablet interface module 200 includes a user interface 206 that is configured to enable a user to connect the tablet interface module 200 to a tablet, such as, in a non-limiting example, tablet 108 shown in FIG. 1. In addition, the user interface 206 may include an indicator, which is configured to indicate if the tablet interface module 200 is connected to a tablet. In one example, the wireless transceiver 202 is configured to use Bluetooth to communicate with the tablet and the user interface 206 includes a pair button which allows the user of the tablet to connect the tablet to the tablet interface module 200. The indicator of the user interface 206 may be a light that indicates that a tablet is connected to the tablet interface module 206. In one embodiment, the tablet interface module 200 may be configured to connect to multiple tablets and the user interface 206 may include a plurality of pair buttons and indicator lights.

In one embodiment, the tablet interface module 200 may also include a battery 212 and/or power supply 210. In one embodiment, the tablet interface module 200 may include a power supply 210 that is configured to condition power received from the aircraft interface device and isolate the tablet interface module 200 from the aircraft power system. In one embodiment, the tablet interface module 200 may be configured to operate solely off of power received from the battery 212 and may have a low power design. In one embodiment, the tablet interface module 200 may be configured to connect to multiple tablet devices and may include a physical connection port for connecting to the tablet devices to provide charging and communications between the tablet interface module 200 and the tablet. For example, the tablet interface module 200 may include one or more universal serial bus (USB) connectors for connecting to tablet devices.

In one embodiment, the wireless transceiver 202 of the tablet interface module 200 may be selected or designed to provide a low power and low visibility communications link to the tablet. For example, the wireless transceiver 202 may be selected to be a Bluetooth 4.0, IEEE 802, or the like capable device. The wireless transceiver 202 is designed such that it is capable of communicating with tablets in close proximity to the tablet interface module 200 and such that the signals that it emits do not interfere with the electronics of the aircraft. In one embodiment, the tablet interface module 200 is configured to provide multiple layers of security to prevent unauthorized access to the tablet interface module 200. Physical access to the tablet interface module 200 is limited to individuals authorized to access the flight deck where the tablet interface module 200 is located. In addition, the tablet interface module 200 is configured such that pairing or connecting to the tablet interface module 200 can only be initiated from the tablet interface module 200 and not a tablet device. Furthermore, the wireless transceiver 202 of tablet interface module 200 may be configured to encrypt data that is transmitted.

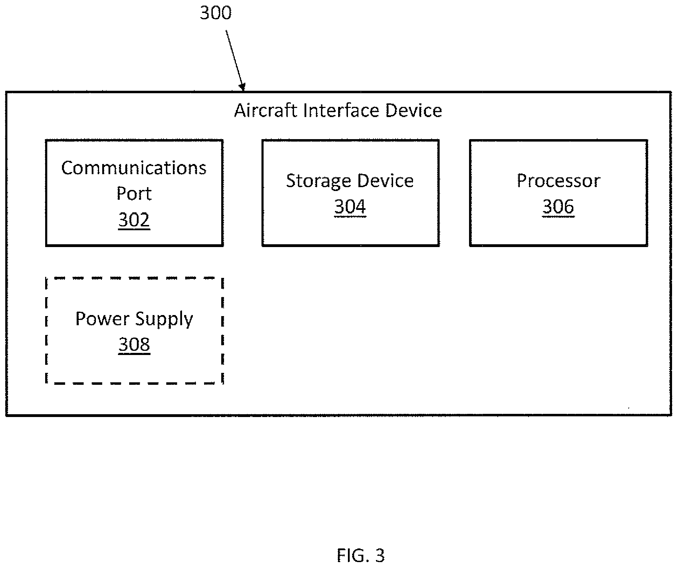

Referring now to FIG. 3, a block diagram of an aircraft interface device 300 in accordance with an embodiment of the disclosure is shown. As illustrated, the aircraft interface device 300 includes a communications port 302, a storage device 304 and a processor 306. The communications port 302 is configured to connect the aircraft interface device 300 to both the tablet interface module and the aircraft avionics system. In one embodiment, the storage device 304 is configured to store the data received from the aircraft avionics system. The storage device 304 may include, but is not limited to, any one or combination of volatile memory elements (e.g., random access memory (RAM, such as DRAM, SRAM, SDRAM, etc.) and nonvolatile memory elements (e.g., ROM, erasable programmable read only memory (EPROM), electronically erasable programmable read only memory (EEPROM), programmable read only memory (PROM), tape, compact disc read only memory (CD-ROM), disk, diskette, cartridge, cassette or the like, etc.). Moreover, the storage device 304 may incorporate electronic, magnetic, optical, and/or other types of storage media. The aircraft interface device 300 also includes a processor 306 which can be any custom made or commercially available processor, a central processing unit (CPU), an auxiliary processor among several processors, a semiconductor based microprocessor (in the form of a microchip or chip set), a macro processor, or generally any device for executing instructions.

In one embodiment, the communications port 302 may include multiple interfaces for receiving information from various components of the aircraft avionics system and for communicating with the tablet interface module. For example, the aircraft interface device 300 may include, but is not limited, to an Ethernet interface, an ARINC 429 interface, an ARINC 717 interface, a USB interface, an RS-232 interface, a RS-422 interface, a RS-485 interface, a SPI interface, a I2C interface, or the like for communicating with the aircraft avionics system and/or the tablet interface module. In one embodiment, by connecting a tablet to the aircraft interface device through the tablet interface module, the tablet is able to access information regarding the entire aircraft avionics system.

In one embodiment, the aircraft interface device 300 may include a power supply 308 that is configured to condition power received from a power system of the aircraft and to provide power to the tablet interface module. The power supply 308 is also configured to isolate the tablet interface module from the aircraft power system.

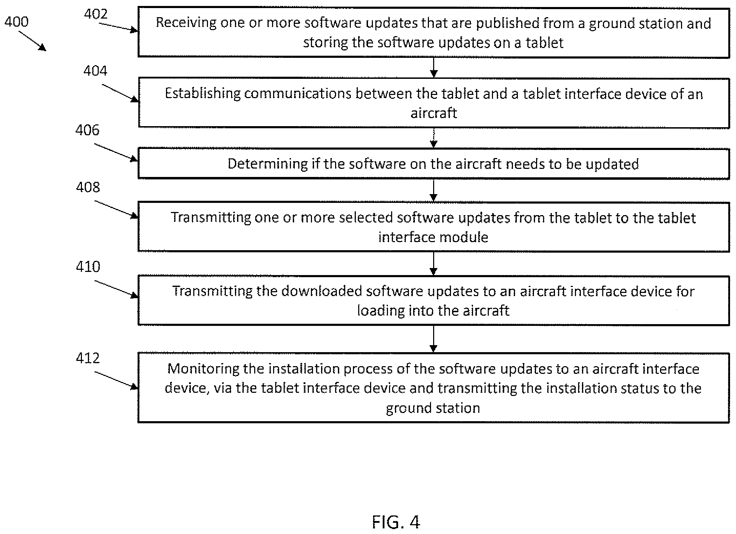

Referring now to FIG. 4, a flow chart diagram of a method 400 for data loading with a tablet in accordance with an embodiment is shown. As shown at block 402, the method 400 includes receiving one or more software updates that are published from a ground station and storing the software updates on a tablet. Next, as shown at block 404, the method 400 includes establishing communications between the tablet and a tablet interface module of an aircraft. Once the communications between the tablet and the tablet interface module of an aircraft are established, the method 400 includes determining if the software on the aircraft needs to be updated, as shown at block 406. If the software on the aircraft needs to be updated, the method 400 proceeds to block 408 and the tablet downloads one or more selected software updates to the tablet interface module. Next, as shown at block 410, the method 400 includes transmitting the downloaded software updates to an aircraft interface device for loading into the aircraft. The tablet monitors the installation process of the software updates to an aircraft interface device, via the tablet interface module and transmits the installation status to the ground station, as shown at block 412. In exemplary embodiments, the method 400 provides a low cost wireless airborne data loading solution via tablet computer and tablet interface module and aircraft interface device, which utilizes a tablet computer as the wireless transport of the data which is then loaded onto the aircraft interface device for data loading the aircraft.

In exemplary embodiments, the tablet interface module may provide automated notifications to tablet device of loaded avionics navigation database effectively that are expired or about to expire. As a result, the maintenance technician could than retrieve required updates from ground station and data load as normal.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the scope of the invention defined by the claims. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A computer-implemented method for data loading with a tablet comprising:
receiving, via a processor on the tablet, one or more software updates published by a ground station and storing the software updates on the tablet;
establishing, via a processor on a tablet interface module, communications between the tablet and the tablet interface module of an aircraft, **characterised in that** the communications can only be initiated from the tablet interface module on the aircraft;
determining, via the processor, if a software on the aircraft needs to be updated;
based on determining that the software on the aircraft needs to be updated, transmitting, via the processor, at least one of the one or more software updates to the tablet interface module for loading into the aircraft; and
monitoring, via the processor on the tablet, an installation process of the software updates in the aircraft via the tablet interface module.

2. The method of claim 1, further comprising transmitting an installation status to the ground station.

3. The method of claim 1 or 2, wherein determining if the software on the aircraft needs to be updated comprises receiving a version number of the software on the aircraft and comparing the version number to a version number of the one or more software updates.

4. The method of any preceding claim, wherein establishing communications between the tablet and the tablet interface module of the aircraft comprises receiving an indication of a type of the aircraft from the tablet interface module.

5. The method of any preceding claim, wherein establishing communications between the tablet and the tablet interface module of the aircraft comprises providing one or more security credentials that are verified by the tablet interface module.

6. The method of any preceding claim, wherein the communications between the tablet and the tablet interface module of the aircraft are wireless.

7. A tablet interface module (200) comprising:
a processor (208);
a first transceiver (202) operatively connected to the processor and configured to communicate with one or more tablets;
a second transceiver (204) operatively connected to the processor and configured to communicate with an aircraft interface device (104); and
a user interface module (206);
**characterised in that** the tablet interface module:
initiates communications with a tablet of the one or more tablets, wherein the communications can only be established by the tablet interface module;
receives software updates, via a processor on the tablet, for an aircraft from the tablet; and
transmits the software updates, via the processor, to the aircraft interface device for loading onto an avionics system of the aircraft.

8. The tablet interface module of claim 7, wherein the user interface module (206) is configured to establish a communications channel between the tablet interface module (200) and the tablet via the first transceiver (202).

9. The tablet interface module of claim 8 or 9, wherein establishing communications between the tablet and the tablet interface module of the aircraft comprises transmitting an indication of a type of the aircraft to the tablet.

10. The tablet interface module of claim 9, wherein establishing communications between the tablet and the tablet interface module of the aircraft further comprises transmitting a version number of the software on the aircraft to the tablet.
